# EUROPEAN PATENT SPECIFICATION

(11) **EP 2 402 604 B1**
(45) Date of publication and mention of the grant of the patent: **20.12.2017**
(21) Application number: 11172067.8
(22) Date of filing: 30.06.2011
(51) Int. Cl.: F03D 7/00, F03D 17/00, F03D 7/02

(54) **Wind turbine blade pitch system**
Vorrichtung zur Verstellung der Rotorblätter einer Windkraftanlage
Dispositif de réglage du pas de l'hélice pour turbine éolienne

(30) Priority: 30.06.2010 DK 201070305
(43) Date of publication of application: 04.01.2012
(73) Proprietor: Vestas Wind Systems A/S, 8200 Aarhus N (DK)
(72) Inventor: Nielsen, Jens Bredal, 7600 Struer (DK)
(74) Representative: Vestas Patents Department

(56) References cited:
- EP-A2- 0 266 715
- CA-A1- 2 718 489
- DD-A1- 119 848
- DE-A1- 2 158 497
- DE-A1- 3 224 136
- US-A- 4 487 226

## Description

### Technical field of the invention

The present invention relates to a pitch system for pitching a blade of a wind turbine by means of a fluid, comprising a manifold which comprises a cylinder for adjusting a pitch angle of the blade, and an accumulator divided into a chamber comprising gas and a chamber comprising liquid, fluidly connected to the cylinder, the fluid having at least one measurable property. Furthermore, the invention relates to a method for measuring the property of the fluid.

### Background art

In a wind turbine, see e.g. CA 2718489 A1, a hydraulic pitch system is used to control the pitch angle of the rotor blades in order to optimise the wind energy production and to ensure that the rotor blades are not subjected to too large loads when big winds are blowing.

The hydraulic pitch system comprises an accumulator having gas on one side and usually oil on the other side to absorb pulsations and to function as reservoir for pumps to minimise pump starts. The accumulators are installed in the hub which is rotated by the rotor blades, whereby the accumulators are subjected to a higher strain than when arranged in a non-rotating structure. Thus, the accumulators in a hydraulic pitch system have a shorter service life than normal accumulators and therefore need to be checked more often. While the accumulators are checked, the wind turbine is brought to standstill, which decreases the production. Furthermore, every stop increases the risk of other elements breaking down since the start/stop procedure puts a heavy load on a number of components.

### Summary of the invention

It is an object of the present invention to wholly or partly overcome the above disadvantages and drawbacks of the prior art and to provide an improved hydraulic pitch system prolonging the service life of the hydraulic accumulators in the pitch system.

The above objects, together with numerous other objects, advantages, and features which will become evident from the below description, are accomplished by a solution in accordance with the present invention, by a hydraulic pitch system for pitching a blade of a wind turbine by means of a fluid, comprising:
- a manifold comprising:
   - a cylinder for adjusting a pitch angle of the blade, and
   - an accumulator divided into a chamber comprising gas and a
   chamber comprising liquid, fluidly connected to the cylinder,
the fluid having at least one measurable property,
wherein the system further comprises a refilling container in fluid communication with the gas of the accumulator and a testing unit adapted to measure at least one property of the fluid in order to determine when to initiate the refilling of the accumulator.

By having a refilling chamber refilling the accumulator when needed, it is only necessary to change the refilling container when servicing the wind turbine.

In addition, it prolongs the service life of the accumulator substantially since the accumulator is refilled continuously and not only when service is performed on the wind turbine. Furthermore, refilling the accumulator more often causes less gas to leak into the oil side of the accumulator, which also prolongs the service life of the accumulator.

In an embodiment of the invention, the testing unit may measure at least one property of the gas and/or liquid in order to determine whether the chamber comprising gas needs refilling of gas from the refilling container.

Furthermore, the testing unit may measure at least one property of the liquid in order to determine whether the chamber comprising gas needs refilling of gas from the refilling container.

In addition, the testing unit may be arranged outside the accumulator without being in fluid communication with the accumulator or the manifold.

Moreover, the testing unit may be in communication with the chamber comprising gas.

Additionally, the testing unit may be in fluid communication with the chamber comprising liquid.

Furthermore, the testing unit may comprise a pressure measuring instrument.

This pressure measuring instrument may be a piezoelectric sensor, an optical sensor, a magnetic sensor, a capacitive sensor, a potentiometric sensor or a resonance sensor.

In an embodiment, the testing unit may comprise an acoustic sensor, an ultrasonic sensor, a manometer or a mass control sensor.

Furthermore, the system may comprise one refilling container per accumulator.

Additionally, the system may comprise one common refilling container for a plurality of accumulators.

Moreover, the system may comprise a distribution block for distributing the gas from the common refilling container to each accumulator.

In an embodiment of the invention, the testing unit may comprise a flow constriction means, such as a flow control valve, a throttle, a nozzle, a check valve or the like means.

In addition, the testing unit may comprise a control system for monitoring measurements.

The control system evaluates the conducted measurements and sends a signal to the operator and controls the wind turbine on the basis of the test results. Hereby, the wind turbine is stopped if an accumulator does not pass the test.

In another embodiment of the invention, the hydraulic pitch system may comprise a system accumulator.

Furthermore, the hydraulic pitch system may further comprise a means for disconnecting the accumulator and connecting another accumulator.

In yet another embodiment, the property of the fluid may be pressure, temperature, viscosity, flow or mass.

Furthermore, the testing unit may measure the property during operation of the wind turbine.

Moreover, the hydraulic pitch system may comprise a system accumulator which replaces the accumulator of the manifold during measuring of the property in relation to that accumulator of the manifold.

In addition, the system accumulator may replace a first accumulator of a first manifold during testing of the first manifold accumulator, and the system accumulator may subsequently replace a second accumulator of a second manifold during testing of the second manifold accumulator, and so forth.

Additionally, the testing unit may measure the property of the fluid which is connected with the system accumulator.

Moreover, the testing unit may measure the property of the hydraulic fluid in fluid communication with the manifold accumulator during a start-up procedure of the wind turbine.

The invention furthermore relates to a method for measuring the property of the fluid to determine whether refilling of the accumulator of the hydraulic pitch system as described above is necessary, comprising the steps of measuring a property of the fluid, evaluating whether the measurement is above or below a predetermined value, and refilling the accumulator if the measurement is below the predetermined value.

Moreover, the invention also relates to a method as described above, comprising the steps of starting a pump for generating a hydraulic pressure in the hydraulic fluid; building up a pressure in the system until a first predetermined pressure; and measuring an initial first fluid pressure and a second fluid pressure after a predetermined period of draining the accumulator, or measuring a period of time where the fluid pressure drops to a predetermined pressure while the accumulator is being drained.

Finally, the invention relates to a method as described above, comprising the steps of comparing the measurement with a predetermined value, and controlling the operation of the wind turbine based on the comparison.

### Brief description of the drawings

The invention and its many advantages will be described in more detail below with reference to the accompanying schematic drawings which, for the purpose of illustration, show some non-limiting embodiments, and in which
Fig. 1 shows a wind turbine comprising a hydraulic pitch system according to the present invention,
Fig. 2 shows a wind turbine hub in which the hydraulic pitch system has been installed,
Fig. 3 shows schematically one embodiment of the hydraulic system comprising a testing unit,
Fig. 4 shows schematically the hydraulic system with another embodiment of the testing unit,
Fig. 5 shows schematically the hydraulic system with a further embodiment of the testing unit,
Fig. 6 shows schematically the hydraulic system with an additional embodiment of the testing unit,
Fig. 7 shows a flow chart of the testing procedure,
Fig. 8 shows one embodiment of a pressure/time test curve, and
Fig. 9 shows another embodiment of a pressure/time test curve.

All the drawings are schematic and not necessarily to scale, and they show only those parts which are necessary in order to elucidate the invention, other parts being omitted or merely suggested.

### Description of preferred embodiments

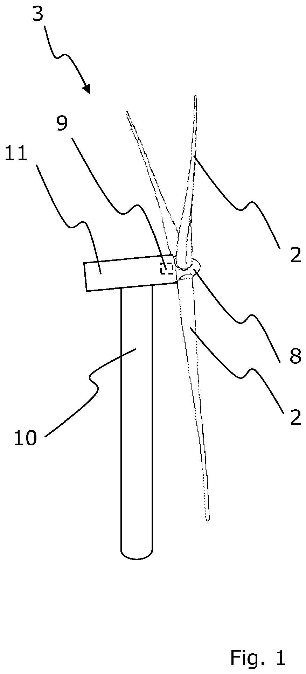

In Fig. 1, a wind turbine 3 having a tower 10, a nacelle 11, a hub 8 and rotor blades 2 is mounted to the hub. Furthermore, the wind turbine 3 comprises a hydraulic pitch system for adjusting the pitch angle of the blades 2 in response to the amount of wind and the wind direction so that no damage occurs in the wind turbine 3. The wind turbine 3 also has a control system 9 arranged in the nacelle 11 for controlling the operation of the wind turbine 3.

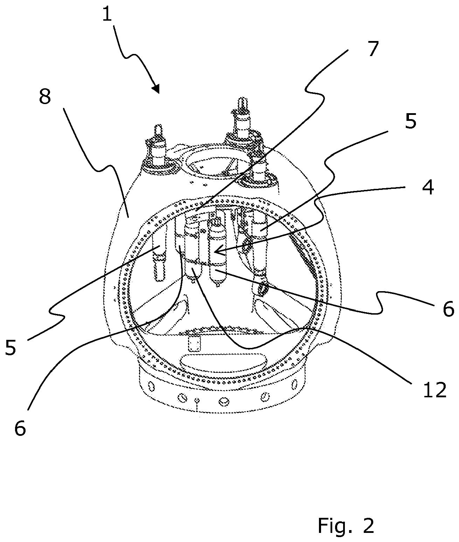

In Fig. 2, the hydraulic pitch system 1 is shown mounted in the hub 8, but the rotor blades 2 have not yet been mounted onto the hub 8. The hydraulic pitch system 1 comprises three manifolds 4, one for each rotor blade. The manifold 4 is the hydraulic system for one rotor blade and comprises a cylinder 5 and an accumulator 6. The cylinder 5 adjusts the pitch angle of the rotor blade 2 in response to wind measurements conducted in another part of the wind turbine 3, and the accumulator 6 absorbs pulsations in the hydraulic system.

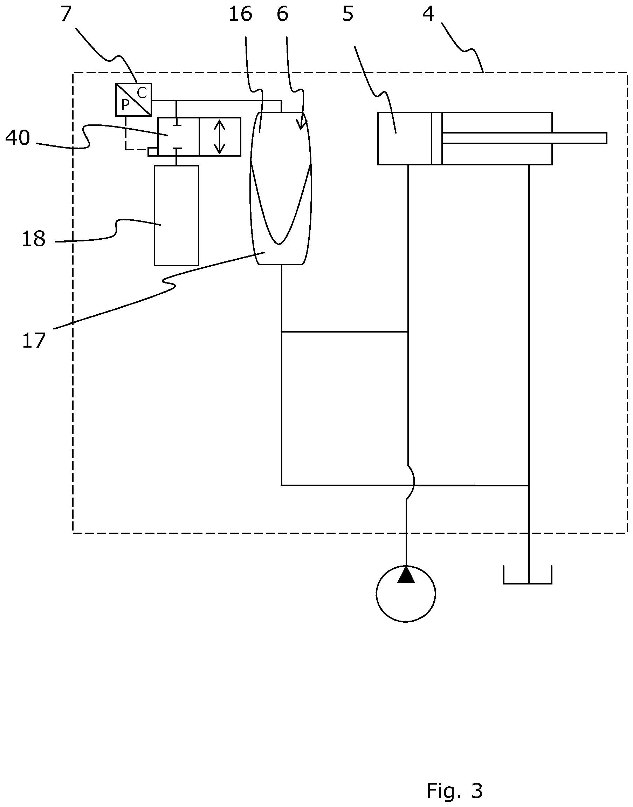

The hydraulic system of each manifold 4 can be seen in Fig. 3. The accumulator 6 has a chamber 16 comprising gas (not shown) and a chamber 17 comprising liquid (not shown). The accumulator 6 is fluidly connected with a refilling container 18 and a testing unit 7 on its gas side. On its liquid side 17, the accumulator is connected to the pitch cylinder. The testing unit 7 performs measurements at predetermined intervals, and based on the results of these measurements, the accumulator 6 is refilled when its gas content is below a certain pressure value.

When servicing the wind turbine, the refilling chamber 18 is refilled or replaced, and the above described process can take place while the wind turbine is running, thereby substantially increasing the operation time of the wind turbine.

In addition, the service life of the accumulator 6 is substantially increased since the accumulator 6 is refilled continuously and not only when service is performed on the wind turbine. Refilling the accumulator 6 more frequently causes less gas to leak into the liquid side of the accumulator 6, which also prolongs the service life of the accumulator 6.

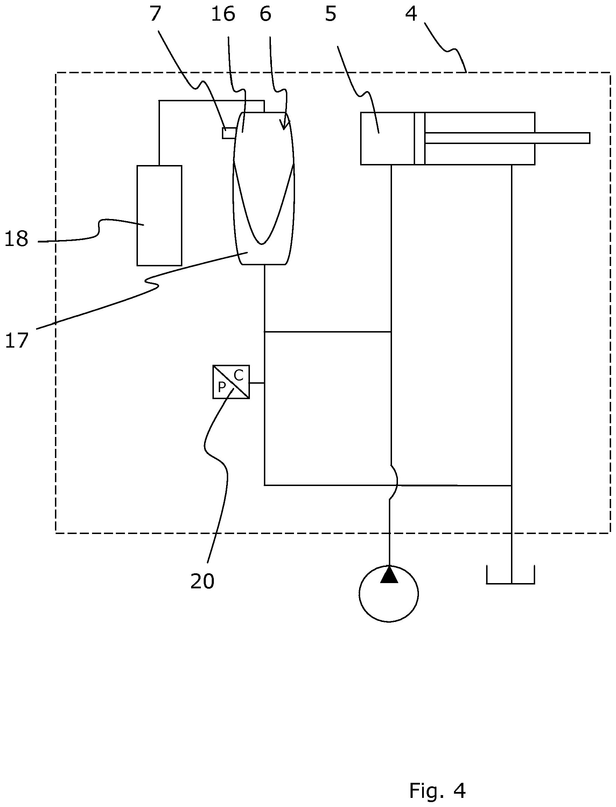

In Fig. 4, the testing unit 7 is mounted on the outside wall of the accumulator 6, and measurements conducted by the testing unit 7 control the opening and closing of the refilling container 18 in order to refill the accumulator 6 as required. The testing unit 7 may also comprise a pressure measuring instrument, such as a pressure transducer 20, arranged in fluid communication with the liquid side of the accumulator 6. By having a pressure measuring instrument 20 in fluid communication with the liquid side, measurements from the liquid side can also be used to control the opening and closing of the refilling container 18 in order to refill the accumulator 6 as required. Furthermore, the measurements of the liquid side can be compared to the measurements of the gas side of the accumulator 6 so as to determine whether the need for refilling is caused by a leak on the liquid side of the accumulator 6, or if the refilling container 18 is empty. Thus, the testing unit 7 comprises several measuring instruments arranged both on the liquid side of the accumulator 6 and on the gas side of the accumulator 6.

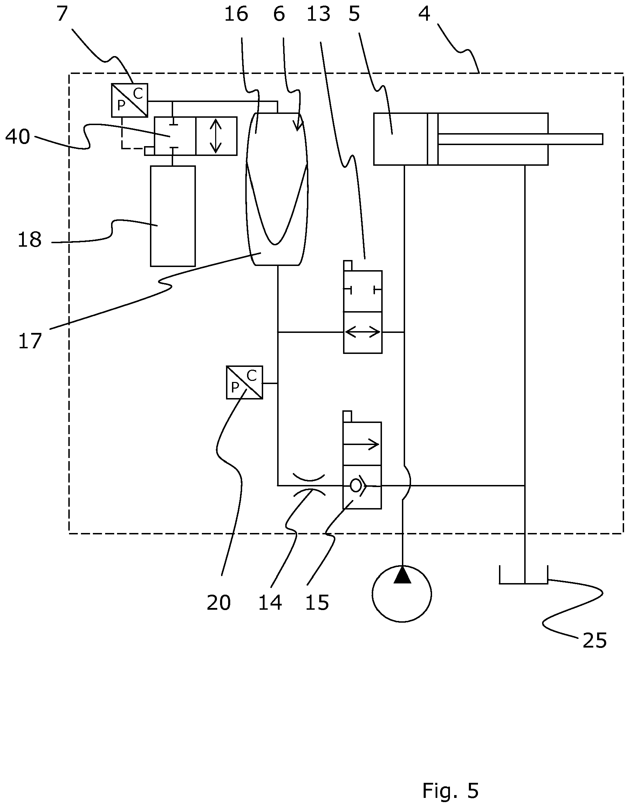

A pressure controlled valve 40 is arranged in connection with the refilling container, as shown in Figs. 3 and 5. In Fig. 4, the valve is comprised in the testing unit 7 or the refilling container.

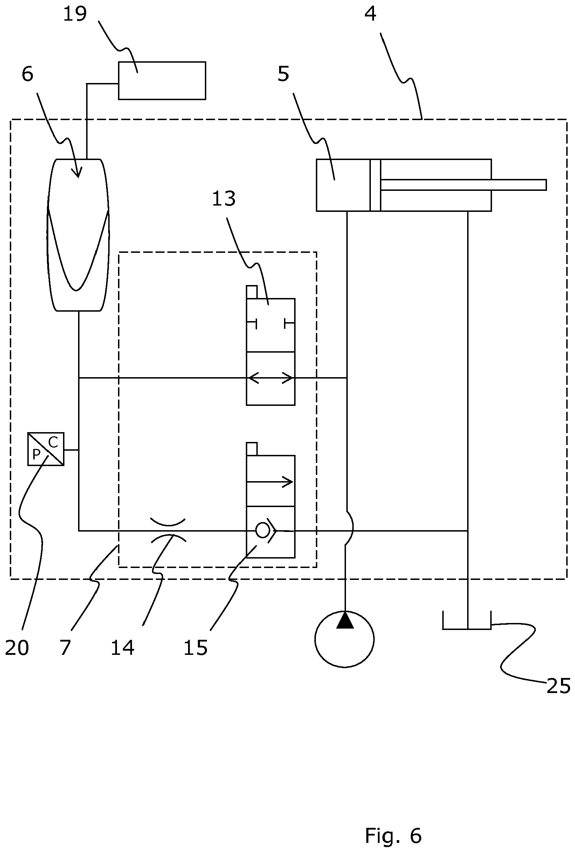

Each manifold 4 comprises a refilling container 18, however, the hydraulic pitch system 1 may also comprise a common refilling container 19, as shown in Fig. 6, and a distribution block (not shown) to be able to distribute the gas to each accumulator of a manifold. The hydraulic pitch system may furthermore comprise a back-up refilling container (not shown) which automatically replaces the common refilling container 19 or one of the refilling containers 18 in a manifold if one is defective or simply empty.

The refilling container is a gas cartridge or a gas cylinder. The testing unit 7 comprises one or more pressure measuring instruments, such as a piezoelectric sensor, an optical sensor, a magnetic sensor, a capacitive sensor, a potentiometric sensor, a resonance sensor, an acoustic sensor, an ultrasonic sensor, a manometer or a mass control sensor.

As can be seen in Fig. 2, each manifold 4 has a manifold accumulator, and aside from these manifold accumulators, the hydraulic pitch system 1 comprises a common accumulator or a system accumulator 12. Each manifold 4 comprises a testing unit 7 which is in fluid communication with the accumulator 6 so as to test each manifold accumulator.

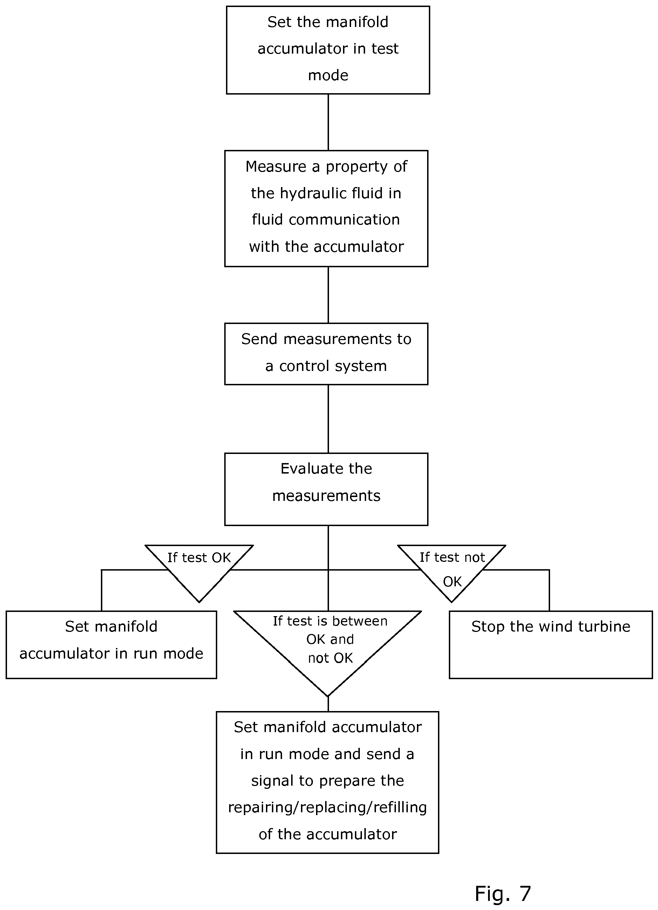

By having a common accumulator 12, a manifold accumulator can be tested without stopping the wind turbine 3. Then, the common accumulator 12 or system accumulator steps in and acts as the manifold accumulator which is being tested. In this way, the operating time of the wind turbine 3 is substantially increased and the number of breakdowns in components in the pitch system 1 can be substantially reduced since the operator is able to replace the accumulators before they break. These replacements can thus take place when the wind turbine 3 is stopped due to other repair work, or the replacements can be done by disconnecting the manifold accumulator to be replaced while the common accumulator is connected and functioning as that manifold accumulator. When testing a manifold accumulator, the system accumulator is fluidly connected to the manifold 4, and a valve 13 is actuated to stop the flow to the manifold accumulator, as shown in Figs. 5 and 6. The manifold accumulator is set in test mode, as shown in the flow chart of Fig. 7. The testing unit 7 comprises a flow constriction means 14, such as a flow control valve, a throttle, a nozzle, a check valve or the like means. The testing unit 7 comprises a pressure transducer 20 to continuously measure the pressure drop in a predetermined time interval or periodically in the same predetermined time interval. The pressure may also simply be measured initially and again when the predetermined time interval has passed. If the pressure drop is too high, i.e. if the pressure is too low when the predetermined time period has passed, the accumulator needs to be replaced, or the gas side of the accumulator needs to be refilled. Thus, the accumulator is refilled with gas, and the test is performed again. If the pressure drop is still too high, i.e. if the pressure is too low when the predetermined time period has passed, the accumulator needs to be replaced. Conversely, if the pressure drop is too low, i.e. if the pressure is too high when the predetermined time period has passed, one of the valves may be defective. If the pressure drop is too high, but not high enough for the accumulator to need replacement, the wind turbine 3 is allowed to operate for a limited period of time. The accumulator then needs to be replaced within that limited time period to avoid the wind turbine 3 being set in STOP mode.

The system may also comprise a relief valve (not shown) so that if the pressure drop is too low, i.e. if the pressure is too high, gas can be let out of the accumulator and the accumulator can be retested. If the pressure is still too high, a valve is defective.

When the manifold accumulator has been tested, it is set in RUN mode if it is allowed to operate. Then, the system accumulator can be used to test another manifold accumulator.

The test results are sent to a control system 9 which may be arranged in the hub 8 or the nacelle 11. The evaluation of the measurements is performed in the control system 9. If the test results show that the accumulator 6 needs immediate replacement, the control unit sends a signal to the operator that the wind turbine has been stopped and that a certain manifold accumulator needs replacement before the wind turbine can run again. In the same way, the control system notifies the operator that a certain manifold accumulator needs replacement within a limited time period to avoid the wind turbine being set in STOP mode.

The test results are archived in the control system or sent to a central control system for several wind turbines. The measurements made by the testing unit can also be used to predict the use of hydraulic fluid in the hydraulic system.

If the pressure drop is too high, but not high enough for the accumulator to need replacement, an alarm is activated so that the next time an operator enters the wind turbine, he is notified that an accumulator needs replacement.

When a manifold accumulator has been tested with a positive result, the valve 13 is activated to fluidly connect the manifold accumulator again. The system accumulator 12 is then used instead of a second manifold accumulator in a second manifold. The valve 13 in a second manifold is then activated to fluidly disconnect the second accumulator while testing the same.

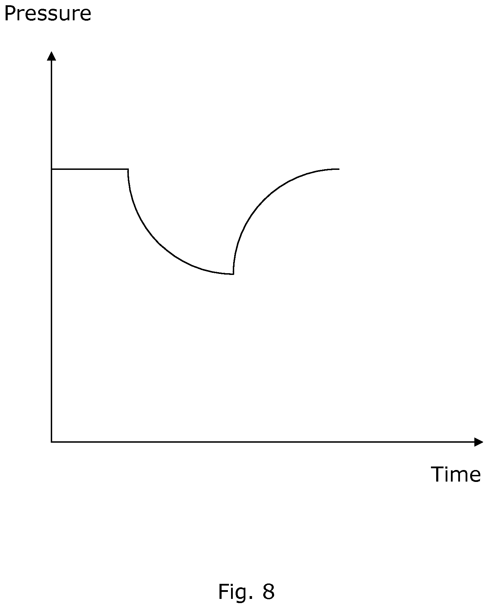

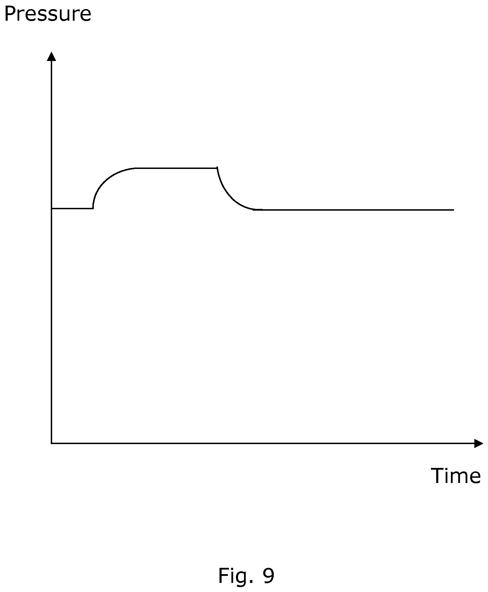

In one embodiment, the pressure drop of the fluid coming from the accumulator is measured, and the pressure is subsequently increased to the operation pressure again, as shown in Fig. 8. In another embodiment shown in Fig. 9, the pressure is increased to a pressure above the operation pressure before the accumulator is drained of fluid during testing, and when the accumulator has been tested, the pressure is increased or decreased to the operation pressure again before the accumulator starts operating again.

In another embodiment, the pressure is increased before the draining takes place, thereby initiating the testing procedure, and when the accumulator test has been performed, the pressure is increased again until it reaches the operation pressure. By increasing the pressure before testing, it may be easier to detect a small leakage in the accumulator. In this embodiment, the testing unit 7 comprises a fluid tank and the system pump is activated to increase the pressure. In another embodiment, the testing unit does not comprise a fluid tank and the pump uses the tank of the pitch system when increasing the pressure.

As can be seen in Figs. 5 and 6, the manifold comprises an additional valve 15 arranged downstream of the throttle 14. The additional valve 15 may be activated to allow the hydraulic fluid to run to the tank 25. The tank 25 may be arranged in the hub 8 or in the nacelle 11.

Before testing each of the manifold accumulators, a test of the common accumulator is performed. This is done by a testing unit of one of the manifolds or by a separate testing unit fluidly connected with the common accumulator. The testing procedure is the same as the procedure mentioned above, and the individual manifold accumulators are only tested if the common accumulator is tested fit to run. If the pressure drop is too high, i.e. if the pressure is too low when the predetermined period of time has passed, and the common accumulator needs to be replaced, the wind turbine is not stopped, but a signal is sent or an alarm is activated to ensure that the common accumulator is replaced as soon as possible.

When testing an accumulator, the fluid is drained to the system tank through a throttle 14 or the like flow restriction means. In one embodiment, the initial pressure is determined, and after a time period of e.g. 10 seconds, the pressure is determined again. In this way, a pressure drop over a period of time can be calculated, and the calculated pressure drop is then compared with level values determining whether the pressure drop is too high or too low. In this embodiment, the testing unit 7 comprises a timer and a pressure determining instrument.

In another embodiment, the pressure is increased to 30-100 bars above the operation pressure in the hydraulic system, and the testing unit disconnects the manifold accumulator. Then the accumulator is drained from fluid and how long time it takes for the pressure to drop from the increased pressure to the operation pressure is measured. Based upon other testing values, the control system evaluate whether the accumulator is efficient enough to operate, should be replaced in the near future or if the wind turbine needs to be stopped in order to avoid damages on the pitch system or other related components.

The system accumulator 12 may be fluidly connected to all the manifolds 4 and therefore does not need to be fluidly connected to the manifold when the manifold accumulator is to be tested. In another embodiment, the common accumulator has to be fluidly connected to a manifold 4 when the accumulator of that manifold is to be tested.

In the event that a manifold accumulator is to be replaced and can no longer be used, the common accumulator or system accumulator can act as that manifold accumulator, which increases the operating time of the wind turbine 3 since it does not have to stop. Then, the damaged manifold accumulator can be changed by the service personnel without stopping the wind turbine.

In another embodiment, the hydraulic pitch system 1 has an additional accumulator, meaning that there are two more accumulators than rotor blades. By having this second system accumulator, the pitch system 1 is able to test even though one manifold accumulator has been replaced with a system accumulator.

The testing unit 7 may comprise a temperature measuring instrument (not shown) or another measuring instrument. The other measuring instrument may replace the pressure measuring instrument or be comprised as an additional measuring instrument. In this way, the measuring instrument may measure any kind of property in the hydraulic fluid, such as the viscosity, flow, velocity, gas/liquid amount, density, temperature or pressure. The testing unit 7 may also be able to measure the presence of gas in the fluid in order to detect a leakage of gas in the accumulator.

The temperature measuring instrument may be a hotwire anemometer, and the flow or velocity measuring instrument may be a sonic anemometer. Being able to measure the temperature enables detection of defective electrical components disposing effect in the fluid before any damage occurs in the components of the wind turbine 3. In the same way, defective components disposing fragments in the fluid in the hydraulic pitch system 1 can be detected before any damage occurs in the components of the wind turbine 3.

In another embodiment, the measuring instrument is positioned outside the wall of the manifold accumulator to measure on the inside of the accumulator by means of an ultrasonic sensor.

The control system of the testing unit 7 may monitor whether the measurements are within a predetermined parameter range, and if it detects that a measured value is outside the predetermined parameter range, it sends a signal to the operator to activate an alarm device.

The control system may also send a signal to the testing unit 7 to test the same accumulator again to verify that the accumulator is not just temporally outside the predetermined range.

The control system 9 may also comprise a plotter device (not shown) for continuously plotting the measurements performed by the testing unit 7. When the service personnel are servicing the wind turbine 3, they can read the results and evaluate if any of the accumulators have a declining trend to predict when the next accumulator needs to be replaced.

The valves 13, 15 in the testing unit 7 may be any kind of valve able to regulate the flow to prevent the fluid from flowing between the cylinder 5 and the accumulator 6. The valves 13, 15 may be operated manually and/or electronically by the control system. Furthermore, the valves may be activated if the pressure in the accumulator drops too much to start the test.

The accumulator 6 may be any kind of accumulator, such as a bladder accumulator, a piston accumulator, a diaphragm accumulator or a metal bellow accumulator.

In one embodiment, the system accumulator 12 is so large that it is able to absorb the fluctuations of all three manifolds, thereby enabling simultaneous testing of all three manifold accumulators.

By a wind turbine is meant any kind of apparatus able to convert wind power into electricity, such as a wind generator, a wind power unit (WPU) or a wind energy converter (WEC).

Although the invention has been described in the above in connection with preferred embodiments of the invention, it will be evident for a person skilled in the art that several modifications are conceivable without departing from the invention as defined by the following claims.

## Claims

1. A hydraulic pitch system (1) for pitching a blade (2) of a wind turbine (3) by means of a fluid, comprising:
- a manifold (4) comprising:
- a cylinder (5) for adjusting a pitch angle of the blade, and
- an accumulator (6) divided into a chamber (16) comprising gas and a chamber (17) comprising liquid, fluidly connected to the cylinder,
the fluid having at least one measurable property, **characterised in that** the system further comprises a refilling container (18) in fluid communication with the gas of the accumulator and a testing unit (7) adapted to measure at least one property of the fluid in order to determine when to initiate the refilling of the accumulator.

2. A hydraulic pitch system (1) according to claim 1, wherein the testing unit (7) is arranged outside the accumulator (6) without being in fluid communication with the accumulator (6) of the manifold.

3. A hydraulic pitch system (1) according to claim 1 or 2, wherein the testing unit (6) is in communication with the chamber (16) comprising gas.

4. A hydraulic pitch system (1) according to any of the preceding claims, wherein the testing unit (7) is in fluid communication with the chamber (17) comprising liquid.

5. A hydraulic pitch system (1) according to any of the preceding claims, wherein the testing unit (7) comprises a pressure measuring instrument (20).

6. A hydraulic pitch system (1) according to any of the preceding claims, wherein the testing unit (7) comprises an acoustic sensor, an ultrasonic sensor, a manometer or a mass control sensor.

7. A hydraulic pitch system (1) according to any of the preceding claims, wherein the testing unit (7) comprises a flow constriction means (14), such as a flow control valve, a throttle, a nozzle, a check valve or the like means.

8. A hydraulic pitch system (1) according to any of the preceding claims, wherein the testing unit (7) comprises a control system (9) for monitoring measurements.

9. A hydraulic pitch system (1) according to any of the preceding claims, further comprising a system accumulator (12).

10. A hydraulic pitch system (1) according to any of the preceding claims, further comprising a means for disconnecting the accumulator and connecting another accumulator.

11. A hydraulic pitch system (1) according to any of the preceding claims, wherein the property of the fluid is pressure, temperature, viscosity, flow or mass.

12. A wind turbine (3) comprising a hydraulic pitch system (1) according to any of the preceding claims.

13. A method for measuring the property of the fluid to determine whether refilling of the accumulator (6) of the hydraulic pitch system (1) according to any of the claims 1-11 is necessary, comprising the steps of:
- measuring a property of the fluid,
- evaluating whether the measurement is above or below a predetermined value, and
- refilling the accumulator (6) if the measurement is below the predetermined value.

14. A method according to claim 13, comprising the steps of:
- starting a pump for generating a hydraulic pressure in the hydraulic fluid,
- building up a pressure in the system until a first predetermined pressure, and
- measuring an initial first fluid pressure and a second fluid pressure after a predetermined period of draining the accumulator, or measuring a period of time where the fluid pressure drops to a predetermined pressure while the accumulator is being drained.

15. A method according to claim 14, comprising the steps of:
- comparing the measurement with a predetermined value,
- controlling the operation of the wind turbine based on the comparison.

## Patentansprüche

1. Hydraulisches Einstellsystem (1) zum Einstellen eines Blattes (2) einer Windturbine (3) mittels eines Fluids, umfassend:
- einen Verteiler (4), umfassend:
- einen Zylinder (5) zum Einstellen eines Anstellwinkels des Blattes, und
- einen Akkumulator (6), der in eine Kammer (16), die Gas enthält, und eine Kammer (17), die Flüssigkeit enthält, unterteilt ist, die fluidisch mit dem Zylinder verbunden ist,
wobei das Fluid mindestens eine messbare Eigenschaft hat, **dadurch gekennzeichnet, dass** das System ferner einen Nachfüllbehälter (18) in Fluidkommunikation mit dem Gas des Akkumulators und eine Testeinheit (7) umfasst, die zum Messen von mindestens einer Eigenschaft des Fluids ausgelegt ist, um zu bestimmen, wann das Nachfüllen des Akkumulators zu initiieren ist.

2. Hydraulisches Einstellsystem (1) nach Anspruch 1, wobei die Testeinheit (7) außerhalb des Akkumulators (6) angeordnet ist, ohne in Fluidkommunikation mit dem Akkumulator (6) des Verteilers zu sein.

3. Hydraulisches Einstellsystem (1) nach Anspruch 1 oder 2, wobei die Testeinheit (6) in Kommunikation mit der Kammer (16) steht, die Gas enthält.

4. Hydraulisches Einstellsystem (1) nach einem der vorherigen Ansprüche, wobei die Testeinheit (7) in Fluidkommunikation mit der Kammer (17) steht, die Flüssigkeit enthält.

5. Hydraulisches Einstellsystem (1) nach einem der vorherigen Ansprüche, wobei die Testeinheit (7) ein Druckmessgerät (20) enthält.

6. Hydraulisches Einstellsystem (1) nach einem der vorherigen Ansprüche, wobei die Testeinheit (7) einen akustischen Sensor, einen Ultraschallsensor, ein Manometer und einen Massenkontrollsensor enthält.

7. Hydraulisches Einstellsystem (1) nach einem der vorherigen Ansprüche, wobei die Testeinheit (7) ein Mittel zum Einschränken des Durchflusses umfasst, wie zum Beispiel ein Strömungsdrosselventil (14), eine Drosselklappe, eine Düse, ein Rückschlagventil oder dergleichen Mittel.

8. Hydraulisches Einstellsystem (1) nach einem der vorherigen Ansprüche, wobei die Testeinheit (7) ein Steuerungssystem (9) zum Überwachen der Messungen umfasst.

9. Hydraulisches Einstellsystem (1) nach einem der vorherigen Ansprüche, das ferner einen Systemakkumulator (12) umfasst.

10. Hydraulisches Einstellsystem (1) nach einem der vorherigen Ansprüche, das ferner ein Mittel zum Abtrennen des Akkumulators und Anschließen eines anderen Akkumulators umfasst.

11. Hydraulisches Einstellsystem (1) nach einem der vorherigen Ansprüche, wobei die Eigenschaft des Fluids Druck, Temperatur, Viskosität, Strömung oder Masse ist.

12. Windturbine (3), die ein hydraulisches Einstellsystem (1) nach einem der vorherigen Ansprüche umfasst.

13. Verfahren zum Messen der Eigenschaft des Fluids, um zu bestimmen, ob das Nachfüllen des Akkumulators (6) des hydraulischen Einstellsystems (1) nach einem der Ansprüche 1-11 notwendig ist, das die folgenden Schritte umfasst:
- Messen einer Eigenschaft des Fluids,
- Bewerten, ob der Messwert oberhalb oder unterhalb eines vorgegebenen Wertes ist, und
- Nachfüllen des Akkumulators (6), falls der Messwert unterhalb des vorgegebenen Wertes ist.

14. Verfahren nach Anspruch 13, das ferner die folgenden Schritte umfasst:
- Starten einer Pumpe zum Erzeugen eines hydraulischen Drucks in dem hydraulischen Fluid,
- Aufbauen eines Drucks im System bis zu einem ersten vorgegebenen Druck, und
- Messen eines anfänglichen ersten Fluiddrucks und eines zweiten Fluiddrucks nach einer vorgegebenen Periode des Entleerens des Akkumulators oder Messen eines Zeitabschnitts, in dem der Fluiddruck auf einen vorgegebenen Druck fällt, während der Akkumulator entleert wird.

15. Verfahren nach Anspruch 14, das ferner die folgenden Schritte umfasst:
- Vergleichen des Messwertes mit einem vorgegebenen Wert,
- Steuern des Betriebs der Windturbine auf der Basis des Vergleichs.

## Revendications

1. Système de calage hydraulique (1) pour caler une pale (2) d'une éolienne (3) au moyen d'un fluide, comprenant :
- un collecteur (4) comprenant :
- un cylindre (5) pour ajuster un angle de calage de la pale, et
- un accumulateur (6) divisé en une chambre (16) comprenant du gaz et une chambre (17) comprenant du liquide, relié fluidiquement au cylindre,
le fluide ayant au moins une propriété mesurable, **caractérisé en ce que** le système comprend en outre un réservoir de recharge (18) en communication fluidique avec le gaz de l'accumulateur et une unité de test (7) adaptée pour mesurer au moins une propriété du fluide afin de déterminer quand initier la recharge de l'accumulateur.

2. Système de calage hydraulique (1) selon la revendication 1, dans lequel l'unité de test (7) est agencée à l'extérieur de l'accumulateur (6) sans être en communication fluidique avec l'accumulateur (6) du collecteur.

3. Système de calage hydraulique (1) selon la revendication 1 ou 2, dans lequel l'unité de test (6) est en communication avec la chambre (16) comprenant du gaz.

4. Système de calage hydraulique (1) selon l'une quelconque des revendications précédentes, dans lequel l'unité de test (7) est en communication fluidique avec la chambre (17) comprenant du liquide.

5. Système de calage hydraulique (1) selon l'une quelconque des revendications précédentes, dans lequel l'unité de test (7) comprend un instrument de mesure de pression (20).

6. Système de calage hydraulique (1) selon l'une quelconque des revendications précédentes, dans lequel l'unité de test (7) comprend un capteur acoustique, un capteur à ultrasons, un manomètre ou un capteur de commande de masse.

7. Système de calage hydraulique (1) selon l'une quelconque des revendications précédentes, dans lequel l'unité de test (7) comprend un moyen d'étranglement d'écoulement (14), tel qu'un clapet de régulation d'écoulement, une soupape, une buse, un clapet anti retour ou des moyens similaires.

8. Système de calage hydraulique (1) selon l'une quelconque des revendications précédentes, dans lequel l'unité de test (7) comprend un système de commande (9) pour surveiller des mesures.

9. Système de calage hydraulique (1) selon l'une quelconque des revendications précédentes, comprenant en outre un accumulateur de système (12).

10. Système de calage hydraulique (1) selon l'une quelconque des revendications précédentes, comprenant en outre un moyen pour déconnecter l'accumulateur et connecter un autre accumulateur.

11. Système de calage hydraulique (1) selon l'une quelconque des revendications précédentes, dans lequel la propriété du fluide est une pression, une température, une viscosité, un écoulement ou une masse.

12. Éolienne (3) comprenant un système de calage hydraulique (1) selon l'une quelconque des revendications précédentes.

13. Procédé pour mesurer la propriété du fluide pour déterminer si la recharge de l'accumulateur (6) du système de calage hydraulique (1) selon l'une quelconque des revendications 1 à 11 est nécessaire, comprenant les étapes suivantes :
- la mesure d'une propriété du fluide,
- le fait d'évaluer si la mesure est au-dessus ou en dessous d'une valeur prédéterminée, et
- la recharge de l'accumulateur (6) si la mesure est en dessous de la valeur prédéterminée.

14. Procédé selon la revendication 13, comprenant les étapes suivantes :
- le démarrage d'une pompe pour générer une pression hydraulique dans le fluide hydraulique,
- l'accumulation de pression dans le système jusqu'à une première pression prédéterminée, et
- la mesure d'une première pression de fluide initiale et d'une seconde pression de fluide après une période prédéterminée de drainage de l'accumulateur, ou la mesure d'une période de temps où la pression de fluide chute à une pression prédéterminée pendant que l'accumulateur est drainé.

15. Procédé selon la revendication 14, comprenant les étapes suivantes :
- la comparaison de la mesure avec une valeur prédéterminée,
- la commande du fonctionnement de l'éolienne sur la base de la comparaison.
